# DEMANDE DE BREVET EUROPEEN

(11) **EP 1 411 222 A1**
(43) Date de publication de la demande: **21.04.2004**
(21) Numéro de dépôt: 03300158.7
(22) Date de dépôt: 16.10.2003
(51) Int. Cl.: F02B 31/04, F01L 3/06

(54) **Culasse pour cylindre de moteur à injection directe fonctionnant notamment selon le cycle diesel et moteur à combustion interne comportant une telle culasse**

(30) Priorité: 16.10.2002 FR 0212883
(71) Demandeur: Renault s.a.s., 92100 Boulogne Billancourt (FR)
(72) Inventeur: Doisy, Anne-Marie, 78240 Chambourcy (FR); Dupont, Alain, 78860 Saint Nom (FR)

(57) **Abrégé**

Cette culasse pour cylindre de moteur à combustion interne et allumage par compression comportant un conduit d'admission amont (2) et un conduit d'admission aval, tous deux débouchant au niveau de la face feu (1a) de ladite culasse, ledit conduit d'admission amont (2) comprenant une cavité apte à contenir un siège de soupape (10), est caractérisée en ce que le conduit d'admission amont comporte des moyens (8) d'accélération et d'orientation d'au moins une partie du flux d'air entrant sensiblement vers le bord de ladite culasse et/ou dans une direction (G) sensiblement perpendiculaire et opposée à la face feu (1a) de ladite culasse.

## Description

La présente invention concerne une culasse pour cylindre de moteur à combustion interne et allumage par compression ainsi qu'un moteur à combustion interne et allumage par compression comportant une telle culasse. La présente invention trouve son application notamment dans les moteurs à injection directe fonctionnant selon le cycle Diesel.

Dans la majorité des moteurs fonctionnant selon le cycle Diesel, un mouvement de rotation de l'air autour de l'axe du cylindre est généré durant la phase d'admission de l'air dans la chambre de combustion. Ce mouvement tourbillonnaire est communément désigné par le terme de « swirl ». Dans les moteurs à injection directe et fonctionnant selon le cycle Diesel, ce mouvement tourbillonnaire est nécessaire au moment de la phase d'injection pour assurer un mélange correct entre l'air entrant et le carburant. Ce mouvement tourbillonnaire est d'autant plus nécessaire pour les faibles charges.

L'augmentation du mouvement tourbillonnaire se fait au détriment de la perméabilité de la chambre de combustion. Divers artifices ont été mis au point afin de réaliser un compromis optimal entre l'augmentation du mouvement tourbillonnaire et la bonne perméabilité de la culasse.

Il est connu, par exemple, d'utiliser des cylindres comprenant deux conduits d'admission tangents à la chambre de combustion du cylindre. Dans ce cas, il est préférable de placer la bougie de préchauffage sous le conduit d'admission ce qui a pour inconvénient d'augmenter considérablement la hauteur de conduit.

Par ailleurs, lorsqu'il n'est pas possible de placer la bougie de préchauffage sous le conduit d'admission, l'interaction entre les deux soupapes d'admission est importante. De plus, une grande partie du flux d'air entrant part directement vers le centre du cylindre, risquant de contrarier le mouvement tourbillonnaire et de diminuer gravement la perméabilité de la culasse.

Le document US-A-6 098 590 préconise d'utiliser des conduits d'admission et d'échappement qui débouchent au niveau de la face feu de la culasse selon une géométrie particulière. Selon ce document, le siège de la soupape est incliné et le conduit d'admission débouchant en s'élargissant progressivement depuis le siège de la soupape vers la face feu de la culasse, présente ainsi une ouverture excentrée au niveau de la face feu.

Le document US-A-6 089 203 décrit une culasse qui comporte un conduit d'admission et un conduit d'échappement tous deux équipés d'une soupape. Selon ce document, lorsque le diamètre du siège de la soupape équipant le conduit d'admission est inférieur au diamètre interne de ce conduit, on obtient une amélioration du mouvement tourbillonnaire de l'air entrant du fait notamment de l'accélération de l'air au passage du siège de soupape.

Le but de la présente invention est de proposer une culasse comportant deux conduits d'admission et qui permet notamment d'obtenir un bon compromis entre la perméabilité et le mouvement tourbillonnaire.

Ce but est atteint au moyen d'une culasse pour cylindre de moteur à combustion interne et allumage par compression comportant un conduit d'admission amont et un conduit d'admission aval tous deux débouchant au niveau de la face feu de la culasse, le conduit d'admission amont comprenant une cavité apte à contenir un siège de soupape. De manière caractéristique selon l'invention, le conduit d'admission amont comporte des moyens d'accélération et d'orientation d'au moins une partie du flux d'air entrant vers la paroi de la culasse et/ou selon une direction perpendiculaire et opposée à la face feu de la culasse.

La présente invention peut permettre de réorienter, au moins partiellement, la fraction de flux entrant qui est naturellement orientée vers le centre du cylindre, vers la paroi de la culasse. Il s'ensuit que l'air ainsi réorienté va circuler tangentiellement à la paroi du cylindre, favorisant ainsi le mouvement tourbillonnaire.

La présente invention peut également permettre d'orienter le flux d'air entrant selon une direction perpendiculaire et opposée à la face feu de la culasse, ce qui favorise également le mouvement tourbillonnaire de l'air entrant.

L'accélération du flux d'air entrant permet d'augmenter l'énergie de ce dernier. Il s'ensuit, du fait de cette accélération et de l'orientation avantageuse du flux d'air entrant imprimée par la présente invention, que le mouvement tourbillonnaire de l'air est grandement favorisé.

L'invention est particulièrement avantageuse dans le cas d'une bougie de préchauffage disposée à proximité du cylindre car, dans cette configuration, une grande partie du flux d'air entrant est orienté vers le centre du cylindre. L'accélération d'au moins une partie du flux associée à son orientation sensiblement tangentielle et/ou selon une direction perpendiculaire et opposée à la face feu de la culasse, permet d'obtenir un mouvement tourbillonnaire (« swirl ») efficace dans le cylindre tout en conservant une bonne perméabilité à la culasse de l'invention.

Les moyens d'accélération et d'orientation du flux d'air entrant précités peuvent être disposés, par exemple, à l'intérieur du conduit d'admission amont, en amont de la cavité servant à recevoir le siège de soupape.

Le mode de réalisation des moyens d'accélération d'orientation du flux n'est pas limité selon l'invention. Selon un mode de réalisation particulier, ils comportent une arête disposée en amont de la cavité apte à contenir le siège de soupape.

Cette arrête peut être est formée par l'intersection de la paroi interne du conduit d'admission amont avec un évidemment ménagé en amont de la cavité précitée.

La présente invention concerne également un cylindre pour moteur à combustion interne et allumage par compression qui comprend une culasse telle que précédemment décrite.

Avantageusement, au moins un des conduits d'admission amont et aval est tangent à la chambre de combustion dudit cylindre.

La présente invention concerne également un moteur à combustion interne et allumage par compression comprenant au moins un cylindre selon la présente invention.

Dans ce moteur, une bougie de préchauffage peut être disposée tangentiellement au conduit d'admission amont.

La présente invention, ses caractéristiques et les avantages qu'elle procure apparaîtront mieux à la lumière de la description qui suit d'un exemple de réalisation particulier qui fait référence aux dessins annexés sur lesquels :
- la figure 1 représente une vue de la face feu d'un mode de réalisation particulier de la culasse de l'invention ;
- la figure 2 représente une coupe du conduit d'admission amont de la culasse représenté sur la figure 1, selon un plan parallèle à l'axe ZZ.

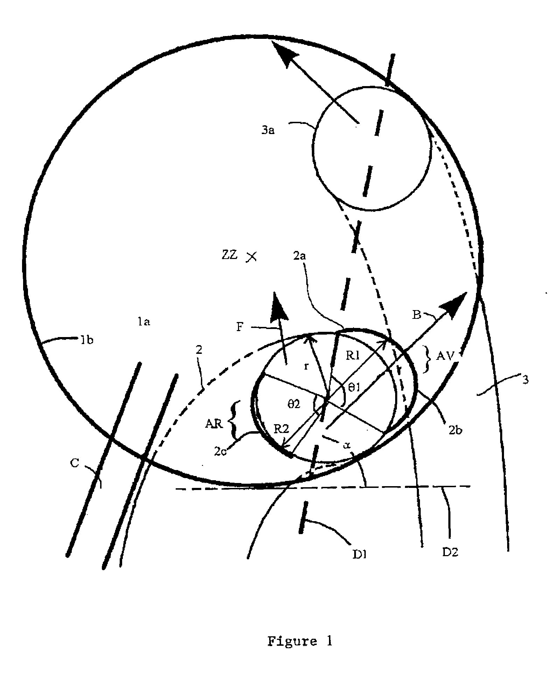

En référence à la figure 1, la culasse 1 comprend un conduit d'amission d'air frais amont 2 et un conduit d'admission d'air frais aval 3. Le conduit d'admission amont 2 débouche dans la culasse formant, au niveau de la face feu 1a, une ouverture 2a. De même, le conduit d'admission aval 3 débouche au niveau de la face feu la en formant une ouverture 3a. Les soupapes qui équipent chacun des conduits d'admission 2 et 3 ne sont pas représentées par souci de simplification.

L'angle α formé entre la droite D1 passant sensiblement par les centres des ouvertures 2a et 3a et la droite D2 qui correspond à l'intersection du plan d'entrée de la culasse avec la face d'entrée des conduits est compris entre 45° et 90°. Cet angle α peut être, par exemple, comme représenté sur la figure 1, sensiblement égal à 60°. Cette configuration permet de générer naturellement un mouvement tourbillonnaire tout en conservant une bonne perméabilité à la culasse.

L'ouverture 2a est dissymétrique et comprend une première portion 2b de rayon R1 disposée au niveau de l'avant soupape AV, sensiblement dans la direction vers laquelle on veut diriger le mouvement tourbillonnaire, en l'occurrence selon la flèche B, et s'étendant sur un angle θ1 d'environ 120°. A l'opposé, au niveau de l'arrière soupape AR, la seconde portion 2c présente un rayon R2 inférieur à R1 et s'étend sur un angle 82 d'environ 120°. R1 et R2 sont tous deux supérieurs à r qui est le rayon de la section transversale du conduit d'admission amont 2.

La bougie de préchauffage C est disposée dans l'exemple particulier représenté, tangentiellement au conduit d'admission amont 2.

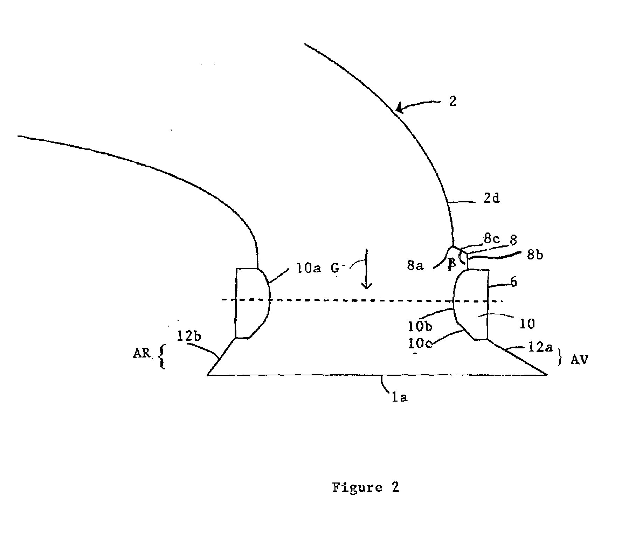

La figure 2 représente une vue en coupe du conduit d'admission 2 équipé d'un siège de soupape 10. Sur cette figure, le conduit d'admission 2 présente une cavité annulaire 6 qui contient le siège de soupape 10. Un évidemment 8 est ménagé sur une portion du périmètre du conduit correspondant sensiblement à la portion 2b précitée en amont de la cavité annulaire 6. L'évidemment 8 forme, avec la portion restante de la paroi interne 2d du conduit d'admission 2 non modifiée, une arrête 8a. L'évidement 8 peut être formé par usinage, dans ce cas l'arête 8a et formée par l'intersection de la paroi interne 2d du conduit d'admission 2 brut et de l'évidemment usiné 8.

L'angle β formé par la paroi verticale 8b de l'évidemment 8 et le bord supérieur (ou paroi supérieure) 8c de l'évidemment 8 est compris entre 110 et 140° et par exemple, comme représenté sensiblement égal à 130°.

En aval de la cavité annulaire 6, le conduit d'admission 2 s'évase en direction de la face feu 1a. Cette portion évasée est représentée en coupe par deux segments 12a et 12b qui correspondent respectivement aux zones 2b et 2c précitées en référence à la figure 1. Cette configuration particulière permet également d'orienter le flux d'air entrant vers l'avant soupape AV et vers la périphérie 1b de la culasse 1 au niveau de la face feu 1a et vient donc en complément de l'orientation du flux d'air entrant dû à l'arête 8a.

Le siège de soupape 10 présente selon le sens de l'écoulement, c'est-à-dire de la face d'entrée des conduits vers la face feu, une première portion 10a qui va en se rétrécissant et une seconde portion 10b allant en s'élargissant. Ces deux portions peuvent être réalisées, par exemple, par usinages successifs. Une troisième portion 10c permet de loger la soupape non représentée. Cette configuration particulière du siège de soupape permet également d'accélérer le flux d'air entrant et vient en complément de l'accélération engendrée par l'arête 8a.

L'arrête 8a permet d'une part d'accélérer l'écoulement de l'air frais entrant vers l'avant soupape AV ce qui permet d'augmenter le mouvement tourbillonnaire lorsque les deux conduits d'admission débitent mais ne force pas ce mouvement tourbillonnaire lorsque seul le conduit d'admission aval 3 débite. De plus, la présence de cette arrête 8a n'augmente que faiblement les pertes de charges. D'autre part, l'arête 8a oriente également au moins une partie du flux d'air entrant vers le bord 1b de la culasse, sensiblement tangentiellement à ce bord 1b (flèche B visible sur la figure 1) et selon une direction parallèle à l'axe ZZ et opposée à la face feu (cette direction est représentée par la flèche G, visible sur la figure 2) augmentant ainsi le flux d'air tourbillonnant. Sans la présence de l'arête 8a, une partie de l'air entrant a tendance à se diriger vers le centre du cylindre (voir flèche F sur la figure 1) risquant ainsi de contrarier le mouvement tourbillonnaire général.

## Revendications

1. Culasse (1) pour cylindre de moteur à combustion interne et allumage par compression comportant un conduit d'admission amont (2) et un conduit d'admission aval (3) tous deux débouchant au niveau de la face feu (1a) de ladite culasse (1), ledit conduit d'admission amont (2) comprenant une cavité (6) apte à contenir un siège de soupape (10), le conduit d'admission amont (3) comportant des moyens (8) d'accélération.et d'orientation d'au moins une partie du flux d'air entrant sensiblement vers le bord (1b) de ladite culasse (1) et/ou dans une direction (G) sensiblement perpendiculaire et opposée à la face feu (1a) de ladite culasse (1), **caractérisée en ce que** lesdits moyens (8) d'accélération et d'orientation du flux comportent une arête (8a) disposée en amont de ladite cavité (6) apte à contenir le siège de soupape (10).

2. Culasse (1) selon la revendication 1, **caractérisée en ce que** ladite arête (8a) est formée par l'intersection de la paroi interne (2d) du conduit d'admission amont (2) avec un évidement (8) ménagé en amont de ladite cavité (6).

3. Culasse (1) selon la revendication 2, **caractérisée en ce que** l'angle (β) formé par la paroi supérieure (8c) de l'évidement (8) et sa paroi verticale (8b) est compris entre 110° et 140° et de préférence sensiblement égal à 130°.

4. Culasse (1) selon l'une quelconque des revendications 1 à 3, **caractérisée en ce que** l'angle (α) formé entre la droite (D2) correspondant à l'intersection du plan d'entrée de la culasse avec un plan parallèle à la face feu et la droite (D2) passant par les deux ouvertures (2a ; 3a) des conduits d'admission (2 ; 3) au niveau de la face feu est sensiblement compris entre 45° et 90°.

5. Culasse (1) selon l'une quelconque des revendications 1 à 4, **caractérisée en ce que** le conduit d'admission amont (2) débouche au niveau de la face feu (1a) de ladite culasse, en formant une ouverture (2a) dissymétrique qui comprend une première portion (2b) de rayon R1 et une seconde portion (2c) de rayon R2 inférieur à R1.

6. Culasse (1) selon l'une quelconque des revendications 1 à 5, **caractérisée en ce que** ladite cavité (6) contenant un siège de soupape (10), ledit siège de soupape (10) présente une section qui diminue d'abord progressivement puis augmente progressivement en allant du conduit d'admission (2) vers la face feu (1a) de la culasse (1).

7. Cylindre pour moteur à combustion interne et allumage par compression, **caractérisé en ce qu'**il comporte une culasse selon l'une quelconque des revendications 1 à 6.

8. Cylindre selon la revendication 7, **caractérisé en ce qu'**au moins un des conduits d'admission amont (2) et aval (3) est tangent à la chambre de combustion dudit cylindre.

9. Moteur à combustion interne et allumage par compression du type comprenant au moins un cylindre **caractérisé en ce que** ledit cylindre est selon la revendication 7 ou 8.

10. Moteur à combustion interne selon la revendication 9, **caractérisé en ce qu'**il comprend une bougie de préchauffage (C) disposée tangentiellement au conduit d'admission amont (2).
